# EUROPÄISCHE PATENTSCHRIFT

(11) **EP 0 493 862 B1**
(45) Veröffentlichungstag und Bekanntmachung des Hinweises auf die Patenterteilung: **29.11.1995**
(21) Anmeldenummer: 91250337.2
(22) Anmeldetag: 18.12.1991
(51) Int. Cl.: F16L 55/165

(54) **Verfahren und Vorrichtung zur Sanierung von Rohrleitungen**
Method and device for the restoration of pipe-lines
Méthode et dispositif pour la rénovation de pipe-lines

(30) Priorität: 27.12.1990 DE 4042000
(43) Veröffentlichungstag der Anmeldung: 08.07.1992
(73) Patentinhaber: Schwert, Siegfried, 14165 Berlin (DE)
(72) Erfinder: Schwert, Siegfried, 14165 Berlin (DE)
(74) Vertreter: Pfenning, Meinig & Partner

(56) Entgegenhaltungen:
- FR-A- 2 445 220
- GB-A- 1 002 131
- GB-A- 1 559 323
- US-A- 4 077 610

## Beschreibung

Die Erfindung betrifft ein Verfahren und eine Vorrichtung zur Sanierung von Rohrleitungen, insbesondere zur dichtenden Innenauskleidung von im Erdreich verlegten Leitungsrohren, gemäß dem Oberbegriff des Anspruchs 1 bzw. 11.

Bei alten oder beschädigten Rohrleitungen, insbesondere für Gase oder Flüssigkeiten, können durch deren Austritt gefährliche Situationen und wirtschaftliche Schäden entstehen. Der Austausch der Leitungsrohre durch Ausgraben ist sehr aufwendig und in vielen Fällen durch die entstehenden Schäden und Behinderungen auch gar nicht möglich.

Es sind daher Verfahren zum Sanieren bzw. zur Reparatur von Rohrleitungen vorgeschlagen worden, mittels derer die vorhandenen Leitungsrohre eine Innenauskleidung erhalten. So beschreibt die DE 39 06 057 ein Verfahren zum Auskleiden eines im Erdreich verlegten Leitungsrohres unter Verwendung eines Auskleideschlauches, dessen Faservliesschicht mit einem aushärtbaren Kunstharz getränkt ist. Der Auskleideschlauch wird in das Leitungsrohr eingeführt und mit einem Druckmedium an die Innenfläche des zu sanierenden Leitungsrohres angepreßt, bis das Kunstharz ausgehärtet ist. Nachteilig bei dieser Lösung ist, daß der Auskleideschlauch mittels eines Seiles und einer Winde aufwendig eingebracht wird und die Aufweitung des Auskleideschlauches durch einen Kalibrierschlauch, der durch ein Inversionsrohr in den Innenraum des Auskleideschlauches eingestülpt wird, erfolgt.

Mit der DE 36 90 695 wurde ein Verfahren zur Erzeugung von Schutzüberzügen an einer Rohrleitungsinnenfläche vorgeschlagen, bei dem ein flexibler Schlauch bei seiner Verschiebung umgestülpt und an die zu überziehende Rohrleitungsinnenfläche durch einen Überdruck angedrückt wird. Nachteilig an diesem Verfahren ist, daß das Klebemittel zwischen dem sich umstülpenden flexiblen Schlauch und einem Kolben angeordnet ist, da Ablagerungen und Unebenheiten an der Rohrleitungsinnenfläche eine Abdichtung durch den Kolben erschweren.

Die DE-OS 19 12 478 beschreibt ein Verfahren zum Einkleben von Kunststoffschläuchen in Rohre oder Rohrleitungen, wobei ein mit Spezialklebstoff versehener Kunststoffschlauch mit Hilfe eines Einstülpkopfes und eines Druckmediums in das Rohr eingestülpt und eingeklebt wird.

Aus der US-A-4 077 610 ist ein Verfahren zum Einbringen eines Folienschlauches in eine Rohrleitung bekannt, bei dem der Folienschlauch an einem Ende der Rohrleitung befestigt und durch ein Druckmedium umstülpend in die Rohrleitung eingepreßt wird. Aus dieser Druckschrift ist jedoch nicht ersichtlich, ob und wie der Druck nach dem Einbringen des Folienschlauches in diesem aufrechterhalten wird.

In der FR-A-2 445 220 ist weiterhin ein Verfahren zur Sanierung von Rohrleitungen offenbart, das insbesondere zur dichtenden Innenauskleidung von Leitungsrohren unter Verwendung eines mit Klebstoff versehenen Folienschlauches vorgesehen ist, wobei der Folienschlauch über einen Transportschlauch mittels eines Druckmediums umstülpend in die Rohrleitung eingepreßt und bis zur Aushärtung des Klebstoffes formstabil gehalten wird, und wobei der Folienschlauch in einem Umkehrkopf über Außenklemmstücke und Innenklemmstücke befestigt, der Umkehrkopf mit einem auf dem zu sanierenden Rohr befestigten Koppelstück verbunden und der Folienschlauch mittels eines Druckmediums in das zu sanierende Rohr umstülpend eingepreßt werden. Nach Abschluß des Einpreßvorganges erfolgt außerhalb des zu sanierenden Rohres eine Abklemmung und auf der dem von der Abklemmstelle aus dem zu sanierenden Rohr zugewandten Seite wird ein Hilfsdruckmedium zum Ausgleich von Druckverlusten zugeführt. Das Abklemmen ist bei normalen Bearbeitungen nicht erforderlich, sondern nur dann notwendig, wenn in dem den Einpreßdruck liefernden Druckbehälter während der Bearbeitung Schwierigkeiten auftreten. Die entsprechende Verschlußvorrichtung wird dann betätigt, um die Leitung für das Druckmittel aus dem Druckbehälter zu verschließen, so daß die Vorwärtsbewegung des Folienschlauches angehalten wird; gleichzeitig wird dem bereits umgestülpten Folienschlauch über einen anderen Weg ein vorgegebener Druckmitteldruck aufgeprägt, bis der Klebstoff ausgehärtet ist. Während dieser Zeit können die Schwierigkeiten im Druckbehälter beseitigt werden. Die Verschlußvorrichtung soll somit im Störungsfall einen Druckabfall im bereits ausgekleideten Rohrbereich verhindern.

Der Erfindung liegt die Aufgabe zugrunde, ein Verfahren und eine Vorrichtung zur Sanierung von Rohrleitungen zu schaffen, welche eine hohe Mobilität ermöglichen und eine schnelle, einfache und sichere Sanierung gewährleisten.

Diese Aufgabe wird gelöst durch ein Verfahren und eine Vorrichtung zur Sanierung von Rohrleitungen mit den kennzeichnenden Merkmalen des Patentanspruchs 1 bzw. 11 im Zusammenwirken mit den Merkmalen des Oberbegriffs des jeweiligen Anspruches. Vorteilhafte Weiterbildungen des erfindungsgemäßen Verfahrens und der erfindungsgemäßen Vorrichtung ergeben sich aus den jeweils zugeordneten Unteransprüchen.

Dadurch, daß ein mit dem Umkehrkopf fest verbundener abklemmbarer Schlauch, durch den der Folienschlauch in den Umkehrkopf und dann in die Rohrleitung eingeführt wird, mittels einer Schlauchklemme abgeklemmt und dieser Schlauch nach erfolgter Abklemmung mittels eines Blindflansches vom zu sanierenden Rohr aus gesehen hinter der Schlauchklemme dichtend verschlossen wird, kann die Vorrichtung bereits zur Sanierung weiterer Rohrleitungen eingesetzt werden, während die Aushärtung des Klebstoffs bei der sanierten Rohrleitung noch stattfindet und daher der Druck in dieser Rohrleitung noch aufrechterhalten werden muß.

Durch die Verwendung des abklemmbaren Schlauches und der Schlauchklemme ist es möglich, die Abklemmung auch bei einem durch die Abklemmstelle hindurchgeführten Rückhalteband zu realisieren. Auftretende Druckverluste werden durch das Hilfsdruckmedium ausgeglichen. Die Anwendung eines verfahrbaren Druckbehälters, welcher den auf seiner Innenseite mit Klebstoff beschichteten Folienschlauch auf einer Trommel aufgewickelt enthält, ermöglicht ein wirtschaftliches und effektives Arbeiten auch auf engstem Raum, da die Sanierungsfahrzeuge nicht direkt an der Einbaustelle stationiert sein müssen. Zur Beschleunigung des Aushärteprozesses des Klebstoffes ist die Verwendung von Warmwasser als Druckmedium möglich. Hierzu wird anstelle des Rückhaltebandes ein Schlauch zur Realisierung eines Warmwasserkreislaufes eingesetzt und der Blindflansch weist einen Wasserzufluß und einen Wasserabfluß auf.

Die Erfindung wird nachfolgend anhand von Ausführungsbeispielen in bezug auf die anliegenden Zeichnungen näher erläutert. Es zeigen:
- Fig. 1: die prinzipielle Anordnung der einzelnen Elemente für die Durchführung des erfindungsgemäßen Verfahrens,
- Fig. 2: die Phase des Transportes des Folienschlauches zur Einbaustelle,
- Fig. 3: den Beginn des Einpreßvorganges des Folienschlauches,
- Fig. 4: das Ende des Einpreßvorganges mit durchgelaufenem Folienschlauch und Rückhalteband,
- Fig. 5: den abgeklemmten und mit Blindflansch versehenen Schlauch sowie die Zuführung des Hilfsdruckmediums.

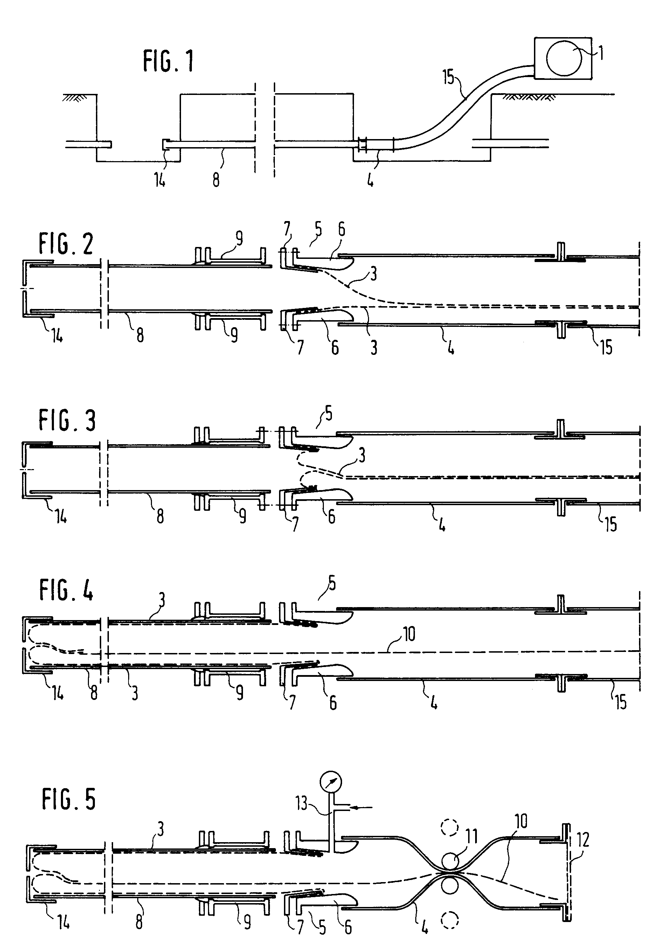

Wie in Fig. 1 dargestellt, befindet sich ein verfahrbarer Druckbehälter 1 in unmittelbarer Nähe der Einbaustelle des zu sanierenden Rohres 8. Der verfahrbare Druckbehälter 1 beinhaltet eine Trommel 1a, auf welcher der auf seiner Innenseite mit kalthärtendem Zweikomponentenklebstoff versehene vorkonfektionierte Folienschlauch 3 aufgewickelt ist. Der Folienschlauch 3 ist gewebeverstärkt. Die Zuführung des Folienschlauches 3 zur Einbaustelle erfolgt über einen Transportschlauch 15.

Wie aus Fig. 2 ersichtlich, wird der Transportschlauch 15 über eine Flanschverbindung mit einem abklemmbaren Schlauch 4 verbunden. Der Schlauch 4 ist an seinem der Einbaustelle zugewandten Ende mit einem Umkehrkopf 5 fest verbunden. Der Umkehrkopf 5 dient dem Festklemmen des Folienschlauches 3 sowie der Ankopplung an das auf dem zu sanierenden Rohr 8 zugfest angeordnete Koppelstück 9. Das Festklemmen des Folienschlauches 3 erfolgt derart, daß der Folienschlauch 3 zwischen Außenklemmstücke 6 und Innenklemmstücke 7 eingelegt und dicht festgeklemmt wird. Der Umkehrkopf 5 wird an das Koppelstück 9 zugfest eingehängt. Das Ende des zu sanierenden Rohres wird mit einer Endkappe 14, welche Mittel zur Entlüftung aufweist, verschlossen. Hierdurch wird ein Herauspressen des Folienschlauches 3 aus dem zu sanierenden Rohr 8 verhindert. Die Vorbereitungsphase für das Einpressen des Folienschlauches 3 ist hiermit abgeschlossen.

Fig. 3 zeigt den Beginn des Einpreßvorganges des Folienschlauches 3. Über den Druckbehälter wird der Folienschlauch 3 mit Druckluft beaufschlagt, wodurch der Folienschlauch 3 am Umkehrkopf 5 umgestülpt und in das zu sanierende Rohr 8 eingepreßt wird.

Der Einpreßvorgang wird solange fortgesetzt, bis der Folienschlauch 3 das Ende des zu sanierenden Rohres 8 erreicht hat.

Der Einpreßvorgang wird über ein in Fig. 4 dargestelltes, am Folienschlauch 3 befestigtes Rückhalteband 10 geregelt und kontrolliert. Das Rückhalteband 10 weist vorzugsweise die gleiche Breite wie der zusammengelegte Folienschlauch 3 auf. Hierdurch wird das gemeinsame Aufwickeln von Folienschlauch 3 und Rückhalteband 10 auf die Trommel 1a in Vorbereitung der Sanierungsarbeiten erleichtert. Durch die Regelung des Einpreßvorganges über das Rückhalteband 10 wird verhindert, daß der Folienschlauch 3 insbesondere in der Endphase des Einpreßvorganges zu schnell eingepreßt wird und gewährleistet, daß der Klebstoff gleichmäßig verteilt und der Folienschlauch 3 an der Innenwandung des zu sanierenden Rohres 8 stets sicher angedrückt wird.

Nach Abschluß des Einpreßvorganges wird der Schlauch 4, wie in Fig. 5 dargestellt, mittels einer Schlauchklemme 11 abgeklemmt. Gleichzeitig wird auf der dem von der Abklemmstelle aus dem zu sanierenden Rohr 8 zugewandeten Seite des Schlauches 4 über einen Stutzen 13 ein Hilfsdruckmedium in Form von Druckluft zum Ausgleich von Druckverlusten geregelt zugeführt. Die Druckverluste können durch Undichtheiten an der Abklemmstelle, insbesondere durch das mit eingeklemmte Rückhalteband 10 entstehen.

Nach dem Abklemmen wird der Transportschlauch 15 vom Schlauch 4 durch Lösen des Flansches getrennt, das Rückhalteband 10 durchtrennt und der Schlauch 4 mittels eines Blindflansches 12 vom zu sanierenden Rohr 8 aus gesehen hinter der Schlauchklemme 11 dichtend verschlossen. Bei vollständig dichten Verbindungen kann das Hilfsdruckmedium nunmehr abgekoppelt werden, es kann jedoch auch aus Gründen der Sicherheit vor eventuell auftretenden Undichtheiten bis zum Abschluß des Aushärteprozesses angekoppelt bleiben. Mit dem Verschluß des Schlauches 4 durch den Blindflansch 12 ist die Einbringphase des Folienschlauches 3 in das zu sanierende Rohr 8 abgeschlossen. Die sich anschließende Aushärtephase erfordert weder Personal noch weitere Gerätetechnik.

Zur Beschleunigung des Aushärteprozesses des Klebstoffes ist es möglich, das Druckmedium Druckluft nach Abschluß des Einpreßvorganges durch das Druckmedium Warmwasser zu ersetzen. Hierbei ist es vorteilhaft, einen Warmwasserkreislauf zu gewährleisten. Zu diesem Zweck wird das Rückhalteband 10 als über Öffnungen mit dem Innenraum des eingepreßten Folienschlauches 3 in Verbindung stehender Schlauch ausgebildet. Der Blindflansch 12 erhält Mittel zum Wasserzufluß und Wasserabfluß. Die Schlauchklemme 11 am Schlauch 4 wird zum Austausch des Druckmediums durch das Druckmedium Warmwasser wieder geöffnet und zur Realiseriung des Wasserkreislaufes geöffnet gehalten.

Die erfindungsgemäße Vorrichtung enthält einen mit dem Schlauch 4 fest verbundenen Umkehrkopf 5. Der Umkehrkopf 5 weist Außenklemmstücke 6 und Innenklemmstücke 7 auf, mittels welcher der Folienschlauch 3 befestigt wird. Auf dem zu sanierenden Rohr 8 ist ein Koppelstück 9 befestigt, welches mit dem Umkehrkopf 5 verbunden ist. Zum Abklemmen des Schlauches 4 ist eine Schlauchklemme 11 und zur Zuführung eines Hilfsdruckmediums ein Stutzen 13 angeordnet. Der dichtende Verschluß des Schlauches 4 erfolgt durch ein Blindflansch 12. Das zu sanierende Rohr 8 ist an dem der Einbringung des Folienschlauches 3 gegenüberliegenden Ende mit einer Endkappe 14, welche Mittel zur Entlüftung aufweist, verschlossen. Das Rückhalteband 10 hat annähernd die gleiche Breite wie der zusammengelegte Folienschlauch 3 und ist im vorliegenden Ausführungsbeispiel als Schlauch zur Realisierung eines Wasserkreislaufes ausgebildet. Der Blindflansch 12 ist mit einem Wasserzufluß und Wasserabfluß versehen.

## Patentansprüche

1. Verfahren zur Sanierung von Rohrleitungen (8), insbesondere zur dichtenden Innenauskleidung von Leitungsrohren unter Verwendung eines mit Klebstoff versehenen Folienschlauches (3), welcher über einen Transportschlauch (15) mittels eines Druckmediums umstülpend in die Rohrleitung (8) eingepreßt und bis zur Aushärtung des Klebstoffes formstabil gehalten wird, wobei der Folienschlauch (3) in einem Umkehrkopf (5) über Außenklemmstücke (6) und Innenklemmstücke (7) befestigt, der Umkehrkopf (5) mit einem auf der zu sanierenden Rohrleitung (8) befestigten Koppelstück (9) verbunden und der Folienschlauch (3) mittels eines Druckmediums in die zu sanierende Rohrleitung (8) umstülpend eingepreßt werden, und wobei nach Abschluß des Einpreßvorganges außerhalb der zu sanierenden Rohrleitung (8) eine Abklemmung erfolgt und auf der von der Abklemmstelle aus der zu sanierenden Rohrleitung (8) zugewandten Seite ein Hilfsdruckmedium zum Ausgleich von Druckverlusten zugeführt wird,
**dadurch gekennzeichnet,** daß ein mit dem Umkehrkopf (5) fest verbundener abklemmbarer Schlauch (4), durch den der Folienschlauch (3) in den Umkehrkopf (5) und dann in die Rohrleitung (8) eingeführt wird, mittels einer Schlauchklemme (11) abgeklemmt und dieser Schlauch (4) nach erfolgter Abklemmung mittels eines Blindflansches (12) vom zu sanierenden Rohr (8) aus gesehen hinter der Schlauchklemme (11) dichtend verschlossen werden.

2. Verfahren nach Anspruch 1, dadurch gekennzeichnet, daß der Folienschlauch (3) auf seiner Innenseite mit Klebstoff versehen und auf einer Trommel (1a) in einem verfahrbaren Druckbehälter (1) aufgewickelt ist.

3. Verfahren nach Anspruch 1 und 2, dadurch gekennzeichnet, daß der Folienschlauch (3) gewebeverstärkt ist.

4. Verfahren nach Anspruch 1, dadurch gekennzeichnet, daß der Einpreßvorgang über ein im Folienschlauch (3) befindliches Rückhalteband (10) geregelt und kontrolliert wird.

5. Verfahren nach Anspruch 1, dadurch gekennzeichnet, daß als Druckmedium Luft verwendet wird.

6. Verfahren nach Anspruch 1 und 2, dadurch gekennzeichnet, daß der Klebstoff ein kalthärtender Zweikomponentenklebstoff ist.

7. Verfahren nach Anspruch 1, dadurch gekennzeichnet, daß der Druck in dem Folienschlauch (3) über einen Stutzen (13) mittels Hilfsdruckmedium bis zum Verschließen des abgeklemmbaren Schlauches (4) mit dem Bindflansch (12) aufrechterhalten wird.

8. Verfahren nach Anspruch 1, dadurch gekennzeichnet, daß der Druck in dem Folienschlauch (3) über einen Stutzen (13) mittels Hilfsdruckmedium bis zum Aushärten des Klebstoffes aufrechterhalten wird.

9. Verfahren nach Anspruch 1, dadurch gekennzeichnet, daß als Druckmedium Wasser verwendet wird.

10. Verfahren nach Anspruch 9, dadurch gekennzeichnet, daß das Wasser zur Beschleunigung des Aushärteprozesses Warmwasser ist.

11. Vorrichtung zur Sanierung von Rohrleitungen (8), insbesondere zur dichtenden Innenauskleidung von Leitungsrohren unter Verwendung eines mit Klebstoff versehenen Folienschlauches (3), mit einem Druckbehälter (1) zur Zuführung eines Druckmediums über einen Transportschlauch (15) zum Folienschlauch (3), einem Umkehrkopf (5) mit Außenklemmstücken (6) und Innenklemmstücken (7) zur Befestigung des ein Rückhalteband (10) aufweisenden Folienschlauches (3) und einem auf der zu sanierenden Rohrleitung (8) befestigten Koppelstück (9), mit dem der Umkehrkopf (5) verbunden ist, wobei zur Zuführung eines Hilfsdruckmediums zum Folienschlauch (3) ein Stutzen (13) vorgesehen ist, **dadurch gekennzeichnet,** daß mit dem Umkehrkopf (5) ein abklemmbarer Schlauch (4), durch den der Folienschlauch (3) in den Umkehrkopf (5) und dann in die Rohrleitung (8) einführbar ist, fest verbunden ist, und daß zum Abklemmen des abklemmbaren Schlauches (4) eine Schlauchklemme (11) sowie zum dichtenden Verschluß des abklemmbaren Schlauches (4) an dem den Umkehrkopf (5) entgegengesetzten Ende ein Blindflansch (12) vorgesehen sind.

12. Vorrichtung nach Anspruch 11, dadurch gekennzeichnet, daß zum Verschließen des zu sanierenden Rohrs (8) an dem der Einbringung des Folienschlauches (3) gegenüberliegenden Ende eine Endkappe (14) vorgesehen ist.

13. Vorrichtung nach Anspruch 12, dadurch gekennzeichnet, daß die Endkappe (14) Mittel zur Entlüftung aufweist.

14. Vorrichtung nach Anspruch 11, dadurch gekennzeichnet, daß das Rückhalteband (10) als Schlauch zur Realisierung eines Wasserkreislaufes vorgesehen ist.

15. Vorrichtung nach Anspruch 11, dadurch gekennzeichnet, daß der Blindflansch (12) mit einem Wasserzufluß und Wasserabfluß versehen ist.

16. Vorrichtung nach Anspruch 14, dadurch gekennzeichnet, daß das Rückhalteband (10) annähernd die gleiche Breite wie der zusammengelegte Folienschlauch (3) aufweist.

## Claims

1. A process for the restoration of pipelines (8), in particular for sealing interior lining of pipes using a foil hose (3) provided with an adhesive, which is invertingly pressed via a transport hose (15) and by means of a pressure medium into the pipeline (8) and shape-retainingly held until the adhesive has hardened, and that the foil hose (3) is mounted in a reversing head (5) via external clamping elements (6) and internal clamping elements (7), the reversing head (5) is connected to coupling element (9) which is to be attached to the pipeline which is to be restored, and the foil hose (3) is invertingly pressed by means of a pressure medium into the pipeline (8) which is to be restored, and on completion of the pressing-in process clamping is carried out outside the pipeline (8) which is to be restored, and an auxiliary pressure medium is delivered at the side facing towards the pipeline which is to be restored, as seen from the clamping point, for the purpose of compensating for pressure losses, **characterized in that** a clampable hose (4), which is firmly connected to the reversing head (5), through which the foil hose (3) is introduced into the reversing head (5) and then into the pipeline (8), is clamped by means of a hose clamp (11), and this hose (4) is, after clamping has been carried out, sealed by means of a blind flange (12) behind the hose clamp (11), as seen from the pipe (8) which is to be restored.

2. A process according to Claim 1, **characterized in that** the foil hose (3) is internally provided with an adhesive and wound onto a drum (1a) in a movable pressure container (1).

3. A process according to Claim 1 and 2, **characterized in that** the foil hose (3) is fabric reinforced.

4. A process according to Claim 1, **characterized in that** the pressing-in process is regulated and controlled by a holding-back band (10) located in the foil hose (3).

5. A process according to Claim 1, **characterized in that** the pressure medium is air.

6. A process according to Claim 1 and 2, **characterized in that** the adhesive is a cold-hardening two-component adhesive.

7. A process according to Claim 1, **characterized in that** the pressure in the foil hose (3) is maintained via a socket (13) and by means of an auxiliary pressure medium until the clampable hose (4) and the blind flange are sealed.

8. A process according to Claim 1, **characterized in that** the pressure in the foil hose (3) is maintained via a socket (13) and by means of an auxiliary pressure medium until the adhesive has hardened.

9. A process according to Claim 1, **characterized in that** the pressure medium is water.

10. A process according to Claim 9, **characterized in that** the water for accelerating the hardening process is warm water.

11. A device for the restoration of pipelines (8), in particular for sealing interior lining of pipes using a foil hose (3) provided with an adhesive, with a pressure vessel (1) for delivering a pressure medium via a transport hose (15) to the foil hose (3), a reversing head (5) with external clamping pieces (6) and internal clamping pieces (7) for attaching a foil hose (3) having a holding-back band (10) and a coupling piece (9) which is mounted on the pipeline (8) which is to be restored and to which the reversing head (5) is connected, with provision being made for a socket (13) for feeding an auxiliary pressure medium to the foil hose (3), **characterized in that** a clampable hose (4), through which the foil hose (3) is insertible into the reversing head (5) and then into the pipeline (8), is connected to the reversing head (5), and that a hose clamp (11) is provided for clamping the clampable hose (4), and a blind flange (12) is provided for sealing the clampable hose (4) at the end opposite the reversing head (5).

12. A device according to claim 11, **characterized in that** an end cap (14) is provided for sealing the pipe (8) which is to be restored at the end opposite the entry point of the foil hose (3).

13. A device according to Claim 12, **characterized in that** the end cap (14) is provided with ventilating means.

14. A device according to Claim 11, **characterized in that** the holding-back band (10) is a hose for the purpose of establishing a water circulation.

15. A device according to Claim 11, **characterized in that** the blind flange (12) is provided with a water supply and a water drain.

16. A device according to Claim 14, **characterized in that** the holding-back band (10) has virtually the same width as the folded foil hose (3).

## Revendications

1. Procédé d'assainissement de tuyauteries (8), en particulier du revêtement interne étanchéifiant de tuyaux conducteurs, par l'utilisation d'un conduit flexible mince (3) qui est pourvu de matière adhésive, est, par l'intermédiaire d'un flexible de transport (15), emmanché au moyen d'un milieu sous pression de manière à se retrousser dans la tuyauterie (8) et est maintenu de manière stable quant à la forme jusqu'au durcissement de la matière adhésive, le conduit flexible mince (3) étant fixé dans une tête de renversement (5) par l'intermédiaire de pièces de pinçage externes (6) et de pièces de pinçage internes (7), la tête de renversement (5) étant reliée à une pièce de couplage (9) fixée sur la tuyauterie (8) à assainir et le conduit flexible mince (3) étant emmanché au moyen d'un milieu sous pression de manière à se retrousser dans la tuyauterie (8) à assainir, un pinçage ayant lieu à l'extérieur de la tuyauterie à assainir (8), après la fin du processus d'emmanchement, et un milieu sous pression auxiliaire destiné à compenser des pertes de pression étant amené au côté tourné vers la tuyauterie (8) à assainir, vu de l'emplacement de pinçage,
caractérisé en ce qu'un conduit flexible (4) pinçable, qui est relié de manière fixe à la tête de renversement (5) et à travers lequel le conduit flexible mince (3) est introduit dans la tête de renversement (5) et ensuite dans la tuyauterie (8), est pincé au moyen d'une pince pour tuyau flexible (11) et en ce que ce conduit flexible (4) est, après que le pinçage a eu lieu, fermé de manière étanche au moyen d'une bride aveugle (12) derrière la pince pour tuyau flexible (11) lorsqu'on regarde à partir de la tuyauterie à assainir (8).

2. Procédé suivant la revendication 1, caractérisé en ce que le conduit flexible mince (3) est pourvu sur sa face interne de matière adhésive et est enroulé sur un tambour (1a) dans un récipient sous pression (1) déplaçable.

3. Procédé suivant l'une des revendications 1 et 2, caractérisé en ce que le conduit flexible mince (3) est renforcé par du tissu.

4. Procédé suivant la revendication 1, caractérisé en ce que le processus d'emmanchement est réglé et contrôlé par l'intermédiaire d'une bande de retenue (10) située dans le conduit flexible mince (3).

5. Procédé suivant la revendication 1, caractérisé en ce qu'on utilise de l'air comme milieu sous pression.

6. Procédé suivant l'une des revendications 1 et 2, caractérisé en ce que la matière adhésive est une matière adhésive à deux composants durcissant à froid.

7. Procédé suivant la revendication 1, caractérisé en ce que la pression dans le conduit flexible mince (3) est, par l'intermédiaire d'un raccord (13), maintenue au moyen d'un milieu sous pression auxiliaire jusqu'à la fermeture du conduit flexible pinçable (4) par la bride aveugle (12).

8. Procédé suivant la revendication 1, caractérisé en ce que la pression dans le conduit flexible mince (3) est, par l'intermédiaire d'un raccord (13), maintenue au moyen d'un milieu sous pression auxiliaire jusqu'au durcissement de la matière adhésive.

9. Procédé suivant la revendication 1, caractérisé en ce qu'on utilise de l'eau comme milieu sous pression.

10. Procédé suivant la revendication 9, caractérisé en ce que l'eau est de l'eau chaude pour accélérer le processus de durcissage.

11. Dispositif d'assainissement de tuyauteries (8), en particulier du revêtement interne étanchéifiant de tuyaux conducteurs, par l'utilisation d'un conduit flexible mince (3) pourvu de matière adhésive, comprenant un récipient sous pression (1) pour amener un milieu sous pression au conduit flexible mince (3) par l'intermédiaire d'un flexible de transport (15), une tête de renversement (5) présentant des pièces de pinçage externes (6) et des pièces de pinçage internes (7) pour la fixation du conduit flexible mince (3) présentant une bande de retenue (10) et une pièce de couplage (9) fixée sur la tuyauterie (8) à assainir, à laquelle la tête de renversement (5) est reliée, un raccord (13) étant prévu pour amener un milieu sous pression auxiliaire au conduit flexible mince (3), caractérisé en ce qu'un conduit flexible pinçable (4), à travers lequel le conduit flexible mince (3) peut être introduit dans la tête de renversement (5) et ensuite dans la tuyauterie (8), est relié de manière fixe à la tête de renversement (5) et en ce qu'une pince pour tuyau flexible (11) est prévue pour le pinçage du conduit flexible pinçable (4) et une bride aveugle (12) est prévue pour la fermeture étanche du conduit flexible pinçable (4) à l'extrémité opposée à la tête de renversement (5).

12. Dispositif suivant la revendication 11, caractérisé en ce qu'un capuchon d'extrémité (14) est, pour la fermeture de la tuyauterie à assainir (8), prévu à l'extrémité opposée à l'introduction du conduit flexible mince (3).

13. Dispositif suivant la revendication 12, caractérisé en ce que le capuchon d'extrémité (14) présente des moyens de désaérage.

14. Dispositif suivant la revendication 11, caractérisé en ce que la bande de retenue (10) est prévue sous la forme d'un flexible destiné à la réalisation d'un circuit d'eau.

15. Dispositif suivant la revendication 11, caractérisé en ce que la bride aveugle (12) est pourvue d'une entrée d'eau et d'une sortie d'eau.

16. Dispositif suivant la revendication 14, caractérisé en ce que la bande de retenue (10) présente approximativement la même largeur que le conduit flexible mince (3) plié.
